Europäisches Patentamt

European Patent Office

Office européen des brevets

(19)

(11) Veröffentlichungsnummer: **0 197 045**
**B1**

(12) **EUROPÄISCHE PATENTSCHRIFT**

(45) Veröffentlichungstag der Patentschrift: **04.04.90**

(21) Anmeldenummer: **85904449.7**

(22) Anmeldetag: **10.09.85**

(86) Internationale Anmeldenummer:
**PCT/EP85/00456**

(87) Internationale Veröffentlichungsnummer:
**WO 86/02220 10.04.86 Gazette 86/08**

(51) Int. Cl.⁵: **H 04 N 3/185, H 02 M 3/335**

(54) SCHALTUNGSANORDNUNG ZUR STROMVERSORGUNG EINES FERNSEHEMPFÄNGERS.

(30) Priorität: **05.10.84 DE 3436555**

(43) Veröffentlichungstag der Anmeldung:
**15.10.86 Patentblatt 86/42**

(45) Bekanntmachung des Hinweises auf die
Patenterteilung:
**04.04.90 Patentblatt 90/14**

(84) Benannte Vertragsstaaten:
**AT BE CH DE FR GB IT LI LU NL SE**

(56) Entgegenhaltungen:
**US-A-4 330 816**

**NEC RESEARCH DEVELOPMENT, No. 69, April
1983, Tokyo (JP) Kaneko et al.: "A Switching
Regulator Control IC for TV Sets", pages 71-76**

**Electronique et Microelectronique Industrielles,
No. 220, 1 May 1976, Paris (FR) Perrin: "TI
CLOPS": "Un circuit d'alimentation à découpage
et de déflexion horizontale à un seul transistor",
pages 28-31**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **HARTMANN, Uwe
Tallardstrasse 15
D-7730 Villingen-Schwenningen (DE)**
Erfinder: **MAI, Udo
Mühleschweg 2
D-7730 Villingen-Schwenningen (DE)**
Erfinder: **RODRIGUEZ, José
An der Kapelle 5
D-7730 Villingen-Schwenningen (DE)**

Courier Press, Leamington Spa, England.

## Beschreibung

Die Erfindung geht aus von einer Schaltungsanordnung zur Stromversorgung eines Fernsehempfängers mit einem zeilenfrequenten synchronisierten Schaltnetzteil.

Bei Geräten der Nachrichtentechnik wie z.B. einem Fernsehempfänger ist es bekannt, die für die einzelnen Stufen notwendigen Betriebsspannungen mit einem Schaltnetzteil aus der Netzspannung zu erzeugen. (Funkschau 1975, Heft 5, S. 40—43). Ein Schaltnetzteil ermöglicht die für den Anschluß äußerer Geräte und für die Maßnahmen zur Schutzisolierung vorteilhafte galvanische Trennung der Empfängerschaltung vom Netz. Da ein Schaltnetzteil mit einer gegenüber der Netzfrequenz hohen Frequenz arbeitet, kann der zur galvanischen Trennung dienende Trenntransformator gegenüber einem Netztransformator für 50 Hz wesentlich kleiner und leichter ausgebildet sein. Durch mehrere Wicklungen oder Wicklungsabgriffe und angeschlossene Gleichrichter können auf der Sekundärseite des Schaltnetzteiletransformators Betriebsspannungen unterschiedlicher Größe und Polarität erzeugt werden.

Bei einem synchronisierten Schaltnetzteil können sich die Regelschaltung auf der Sekundärseite und die Ansteuerschaltung und die Schutzschaltung auf der Primärseite befinden. Ein derartiges Netzteil benötigt ein netzisoliertes Koppelelement wie z.B. einen Optokoppler, damit z.B. die Regelinformation unter Wahrung der Netztrennung auf die Primärseite übertragen wird. Das ist z.B. wichtig, wenn die Versorgungsspannung für die Ablenkung stabil gehalten werden soll, die ohne Regelung durch die Modulation der Tonendstufe schwanken würde. Dieser zunächst als Mehraufwand erscheinende Nachteil wird dadurch ausgeglichen, daß ein synchronisiertes Schaltnetzteil wesentlich einfacher zu entstören ist, da sich die Schaltfrequenz beim unsynchronisierten Schaltnetzteil mit der Last ändert, während die Schaltfrequenz bei synchronisiertem Schaltnetzteil konstant bleibt und z.B. mit Zeilenfrequenz oder deren Harmonischen arbeitet.

Es gibt zur Ansteuerung des Schaltnetzteils eine integrierte Schaltung (TEA 2026), die eine Schutzschaltung beeinhaltet, die bei Störungen das Gerät abschaltet. Diese Schutzschaltung wirkt auf einem Impulsbreiten-Modulator ein, der die Ansteuerimpulse für den primärseitig angeordneten Schalter über einen Optokoppler liefert. Eine in der integrierten Schaltung angeordneten Anlaufschaltung gibt nach Beseitigung der Störung den Impulsbreiten-Modulator wieder frei, so daß dieser ein weiches Einschalten des Schaltnetzteils dadurch bewirkt, daß er die Ansteuerimpulse von einem Impuls kleiner Breite gebinnend, die stetig anwachsenn, abgibt. Außer dieser Schutzschaltung ist auf der Primärseite noch eine Überlastsicherung vorhanden, die bei überschreiten eines Grenzwertes des durch den Schalttransistor fließenden Stromes die Ansteuerung des Schalttransistors unterbricht. Nun besteht die Schwierigkeit, die Information des erhöhten Kollektorstromes auf die Sekundärseite des Schaltnezteils zu bringen, da auf dieser Seite die Schutzschaltung für die Endabschaltung liegt. Diese Information kann z.B. durch einen Trenntransformator oder mit Hilfe eines weiteren Optokopplers übertragen werden. Dies bedeutet jedoch einen Mehraufwand.

In der US—A—4,330,816 wird eine Schaltungsanordnung für ein Schaltnetzteil beschrieben, in welcher eine Komparatorschaltung verwendet wird, an deren einen Eingang eine vom Schaltnetzteil erzeugte Sekundärspannung und an deren anderen Eingang eine Referenzspannung gelegt ist. Die Komparatorschaltung dient hierbei dazu, aus dem Spannungsvergleich den Impulsbreiten-Modulator derart zu steuern, daß durch Verändern der Breite der den Schalter des Schaltnetzteils ansteuernden Impulse, die erzeugten Sekundärspannungen konstant bleiben. Primärseitige Störungen werden durch die Komparatorschaltung jedoch nicht erfasst.

Der Erfindung liegt die Aufgabe zugrunde, eine Lösung zu finden, die unter Vermeidung einer zusätzlichen Netztrennstelle die Störinformation auf die Sekundärseite des Schaltnetzteils übermittelt. Diese Aufgabe wird durch die in den Patentansprüchen gekennzeichnete Erfindung gelöst.

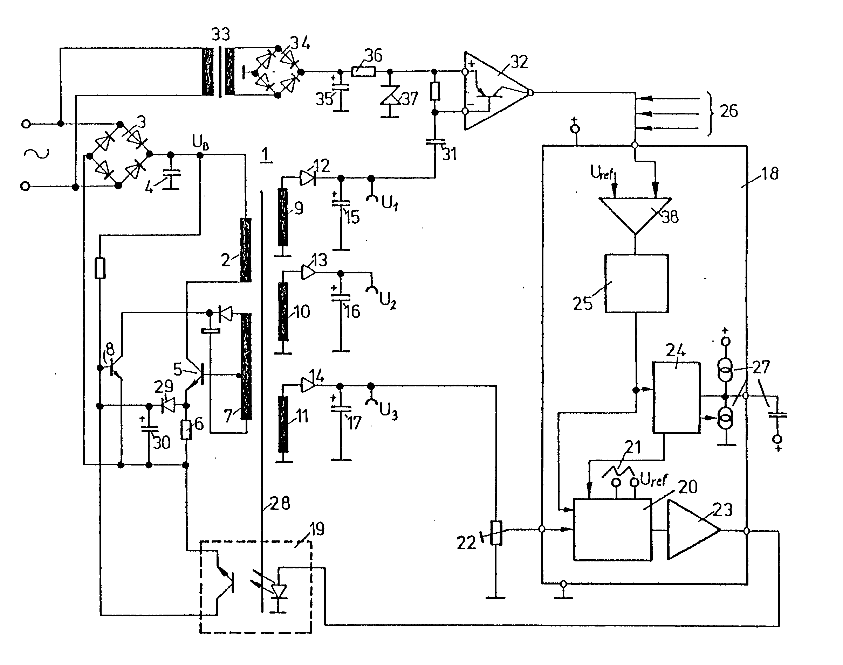

Ein Ausführungsbeispiel der Erfindung wird anhand der Zeichnung erläutert.

Mit 1 ist der Transformator des Schaltnetzteils bezeichnet mit einer Primärwicklung 2, die mit ihrem einen Ende an der durch einen Netzgleichrichter 3 gleichgerichteten und durch den Kondensator 4 geglätteten Versorgungsspannung UB und mit ihrem anderen Ende über einem Transistor 5 und einen Strommeßwiderstand 6 am negativen Pol des Netzgleichrichters 3 liegt. Der Transistor 5 wird über eine weitere Wicklung 7 des Transformators 1 angesteuert, der ein mit in ihrer Breite modulierten Impulsen betätigter Schalter 8 parallel geschaltet ist. Immer wenn der Schalter 8 nichtleitend ist, ist der Transistor 5 leitend oder umgekehrt. Durch das wechselseitige Öffnen und Schließen mit der Impulsfrequenz wird die induzierte Spannung auf die Sekundärseite des Transformators 1 übertragen, so daß an den Sekundärwicklungen 9, 10 und 11 über Gleichrichter 12 und 13 und 14 Sekundärgleichspannunge U1, U2 und U3 an den Kondensatoren 15, 16 und 17 entstehen. Die breitenmodulierten Impulse werden von einer Steuerschaltung 18 erzeugt und gelangen über den Optokoppler 19 an die Steuerelektrode des Schalters 8. Die Impulse werden in bekannter Weise von einem Impulsbreiten-Modulator 20 erzeugt, indem eine auf der netzgetrennten Seite des Schaltnetzteils mit Hilfe eines nicht näher bezeichneten Oszillators erzeugte zeilenfrequente sägezahnförmige Spannungen 21 mit einer aus dem Schaltnetzteil erzeugten Spannung z.B. U3 verglichen wird. Diese Spannung wird mit Hilfe eines Spannungsteilers 22 einstellbar gemacht. Die in einem Verstärker 23 verstärkten Impulse gelangen dann an den Optokoppler 19. In der Steuerschaltung 18 ist noch eine Anlaufschaltung 24 vorhanden, die beim Inbetriebsetzen des Schaltnetzteils dafür sorgt, daß die Impulse von einem Minimalwert der Impulsbreite beginnend, langsam auf einen geregelten Wert anwachsen. Die Steuerschaltung 18 besitzt eine Schutzschaltung 25, die von mehreren sekundärseitig auftretenden Störgrößen beeinflußt werden kann. So spricht diese z.B. auf Bildröhrenüberschläge, Überspannungen oder zu hohe Ströme usw. an. Diese Eingänge sind symbolisch mit 26 angedeutet.

Im Störfall wird der Impulsbreiten-Modulator 20 abgeschaltet. Hiernach wird die Anlaufschaltung 24 nach einer von einem Zeitglied 27 abhängigen Zwangspause wieder eingeschaltet, so daß das Schaltnetzteil sanft wieder anläuft. Auf der Netzseite des Schaltnetzteils, dessen Netztrennung durch die Linie 28 symbolisch angedeutet ist, ist ein Überlastschutz eingebaut. Es wird der Strom durch den Transistor 5 gemessen. Bei Überschreiten eines Grenzwertes wird am Widerstand 6 ein Spannungsabfall erzeugt, der über eine Diode 29 an dem Kondensator 30 eine Spannung aufbaut, die den Schalter 8 leitend steuert, so daß der Transistor 5 sofort stromlos wird. Dieser Zustand als Kriterium für eine Überlastung muß nun auf die netzgetrennte Seite des Schaltnetzteils übertragen werden, damit die dort befindliche in der Steuerschaltung 18 angeordnete Schutzschaltung 25 ansprechen und für ein sanftes Einschalten des Schaltnetzteils sorgen kann. Um die Störinformation auf die netzgetrennte Seite zu übertragen, wird die Tatsache ausgenutzt, daß im Störfall sämtliche Sekundärspannungen einen negativen Spannungssprung erfahren. Deshalb wird eine der erzeugten Sekundärspannung z.B. U1 über einen kondensator 31 an den einen Eingang eines Komparators 32 geschaltet. An dem anderen Eingang des Komparators liegt eine ständig vorhandene Spannung an. Diese Spannung von z.B. 5 Volt kann aus einem gesonderten Transformator 33 entnommen werden, der bei einem Fernsehempfänger die Stufen für eine Fernbedienung in Betriebsbereitschaft hält. Diese mittels des Gleichrichters 34 gleichgerichtete und mit Hilfe des Kondensators 35 gesiebte Spannung, die über den Widerstand 36 mit Hilfe einer Zenerdiode 37 stabil gehalten wird, wird als Referenzspannung dem zweiten Eingang des Komparators 32 zugeführt. Sobald über den Kondensator 31 ein negativer Spannungssprung gelangt, der unterhalb der Referenzspannung liegt, gibt der Komparator einen Impuls ab, der die Schutzschaltung 25 über den Schwellenwertschalter 38 einschaltet. Das Schaltnetzteil ist dann abgeschaltet.

In der Anlaufschaltung 24 kann ein Zähler eingebaut sein, der die aufeinanderfolgenden Einschaltungen nach einer Abschaltung zählt. Bei einer bestimmten Anzahl dieses Vorgangs kann eine endgültige Abschaltung der Ansteuerung des Netzteils erfolgen, um das von diesen versorgte Gerät zu schonen und um eine durch Überlastung von Bauelementen verursachte Brandgefahr auszuschließen.

## Patentansprüche

1. Schaltungsanordnung zur Stromversorgung eines Fernsehempfängers mit einem zeilenfrequent synchronisierten Schaltnetzteil zur Netztrennung des Empfängers mit einer auf der Primärseite des Schaltnetzteils angeordneten Schutzschaltung gegen überlastung sowie mit einer sekundärseitigen Regelschaltung (18) zur in Abhängigkeit von der Belastung impulsbreitenmodulierten Ansteuerung eines primärseitig angeordneten Schalttransistors über ein netztrennendes Koppelelement (19) sowie mit einer Komparatorschaltung (32), an deren einen Eingang eine vom Schaltnetzteil erzeugte Sekundärspannung und deren anderen Eingang eine Referenzspannung geschaltet ist, dadurch gekennzeichnet, daß die Komparatorschaltung (32) bei Ansprechen der primärseitigen Schutzschaltung (6, 29, 30, 8) durch Absinken der erzeugten Sekundärspannung am Komparatoreingang ein Signal am Komparatorausgang für die sekundärseitige Schutzschaltung (25) liefert, welche über die Ansteuerschaltung (24) den Impulsbreiten-Modulator (20) zur Ansteuerung des Schaltnetzteils nach einer Zwangspause wieder einschaltet.

2. Schaltungsanordnung nach Anspruch 1, dadurch gekennzeichnet, daß die vom Schaltnetzteil unabhängige Spannung als Referenzspannung für die Komparatorschaltung (32) aus einem Netzteil zur Erzeugung der Stand-by-Spannung entnommen ist.

## Revendications

1. Circuit pour l'alimentation électrique d'un récepteur de télévision comportant un bloc d'alimentation secteur synchronisé avec la fréquence de lignes servant à l'isolement du récepteur par rapport au secteur, un circuit de protection contre les surcharges disposé du côté primaire du bloc d'alimentation secteur, un circuit de commande (18) disposé du côté sécondaire pour la commande par impulsions modulées en largeur en fonction de la charge d'un transistor de commutation disposé du côté primaire par l'intermédiaire d'un élément de couplage (19) isolé par rapport au secteur, ainsi qu'un circuit comparateur (32) à l'une des entrées duquel est appliquée une tension secondaire élaborée par le bloc d'alimentation secteur et, à l'autre entrée, une tension de référence, caractérisé en ce que le circuit comparateur (32), lors d'une réaction du circuit de protection primaire (6, 29, 30, 8) du fait d'une baisse de la tension secondaire élaborée constatée à l'entrée du comparateur, délivre à la sortie du comparateur un signal pour le circuit de protection secondaire (25) qui, après une pause forcée, réenclenche le modulateur de largeur d'impulsions (20) pour la commande du bloc d'alimentation secteur par l'intermédiaire du circuit de démarrage (24).

2. Circuit selon la revendication 1, caractérisé en ce que la tension isolée par rapport au secteur servant de tension de référence pour le circuit comparateur (32) est prélevée sur un bloc d'alimentation pour l'élaboration de la tension de veille.

## Claims

1. A circuit arrangement for the supply of current to a television receiver with a line-frequency synchronized switched-mode power supply for separating the receiver from the mains, having a protective circuit against overloading disposed at the primary side of the switched-mode power supply and having a control circuit (18) at the secondary side for the drive, pulse-width-modulated depending on the load, of a switching transistor disposed at the primary side, via a mains-isolating coupling element (19), and having a comparator circuit (32) to the one input of which there is connected a secondary voltage produced by the switched-mode power supply and to the other input of which there is connected a reference voltage, characterised in that, on response of the protective circuit (6, 29, 30, 8) at the primary side, the comparator circuit (32), as a result of a drop in the secondary voltage produced at the comparator input, delivers a signal at the comparator output for the protective circuit (25) at the secondary side which, via the drive circuit (24), again switches on the pulse-width modulator (20) to drive the switched-mode power supply after a compulsory interval.

2. A circuit arrangement according to Claim 1, characterised in that the voltage independent of the switched-mode power supply is taken, as a reference voltage for the comparator circuit (32), from a power supply unit for producing the stand-by voltage.